Europäisches Patentamt

European Patent Office

Office européen des brevets

(11) Publication number: **0 076 616**
**A2**

(12) **EUROPEAN PATENT APPLICATION**

(21) Application number: **82305080.2**

(22) Date of filing: **27.09.82**

(51) Int. Cl.³: **G 01 G 3/12**
**G 01 G 3/14, G 01 L 1/26**

(30) Priority: **02.10.81 US 308112**

(43) Date of publication of application:
**13.04.83 Bulletin 83/15**

(84) Designated Contracting States:
**DE FR GB NL**

(71) Applicant: **MAATSCHAPPIJ VAN BERKEL'S PATENT N.V.**
**P.O. Box 6018 Keileweg 5**
**NL-3029 BR Rotterdam(NL)**

(72) Inventor: **Somal, Hardev Singh**
**330-1/2 Rockwood Street**
**LaPorte Indiana 46350(US)**

(74) Representative: **MacDougall, Donald Carmichael et al,**
**Messrs. Cruikshank & Fairweather 19 Royal Exchange Square**
**Glasgow G1 3AE, Scotland(GB)**

(54) **Load cell with overload protection system.**

㊼ A load cell (10) having a self-contained overload protection system (9) for preventing the load cell (10) from being loaded beyond its rated capacity, wherein the load cell (10) includes fixed (20) and movable (21) end constraints held in spaced relation by upper (22) and lower 23) flexures between the constraints, and the protection system (9) comprises a cantilever beam (40) extending from one of the end constraints (20, 21) coacting with a stop means (41) extending from the other of the end constraints (20, 21) to prevent the load cell (10) from exceeding its safe overload range.

EP 0 076 616 A2

## LOAD CELL WITH OVERLOAD PROTECTION SYSTEM

This invention relates to load cells and more particularly to a load cell having an overload protection system.

A known form of load cell of the parallel beam transducer type is shown in U.S. Patent 4,181,011, and includes spaced-apart fixed and movable end constraints interconnected by upper and lower flexures and is provided with a sensing beam coacting with the end constraints and flexures. It is known to provide an overload protection device for this type of load cell, as shown in U.S. Patent 4,254,841, which device makes use of helical springs and sliding cam members. Because of the high response time of these elements, the effectiveness of the overload protection is unsatisfactory when the load cell is subjected to accidental loading or shock loading which may be experienced during shipping or normal service. It has been found that damage to load cells caused by such shock loading has been extensive. Further, the overload protection device disclosed in U.S. Patent 4,254,841 depends for its operation upon the weighing scale structure of which the load cell forms part so that the load cell will not have the protection desired in all applications.

It is an object of the present invention to provide a load cell with an overload protection system which overcomes the difficulties of heretofore known load cells having such protection systems in that it is an object to protect against shock loading as well as gradually applied loads.

According to the present invention there is provided a load cell for measuring forces applied thereto and having an overload protection system, wherein said load cell comprises a parallel beam transducer having a fixed end constraint and a movable end constraint held in spaced relation from said fixed end constraint characterised in that said overload protection system includes a cantilever beam mounted on and extending from one of said end constraints, stop means mounted on the other of said end constraints coacting with the cantilever beam to limit movement of said movable end constraint and thereby protect the load cell against overload.

Embodiments of the present invention will now be described by way of example with reference to the accompanying drawings in which:

Fig. 1 is a perspective view of a load cell of a first type having an overload protection system according to the present invention;

Fig. 2 is a greatly enlarged part vertical sectional view taken along line 2-2 of Fig. 1;

Fig. 3 is a greatly enlarged part vertical sectional view taken along line 3-3 of Fig. 1;

Fig. 4 is a perspective view of a load cell of the type shown in Fig. 1 and having a modified overload protection system according to the present invention;

Fig. 5 is a side elevational view of Fig. 4;

Fig. 6 is an enlarged perspective view of a component of Figs. 4 and 5;

Fig. 7 is a perspective view of a load cell of the type shown in Fig. 1 with a still further modified overload protection system according to the present invention;

Fig. 8 is a sectional view taken along line 8-8 of Fig. 7;

Fig. 9 is a perspective view of a load cell of a second type having an overload protection system according to the present invention; and

Fig. 10 is a sectional view taken along line 10-10 of Fig. 9.

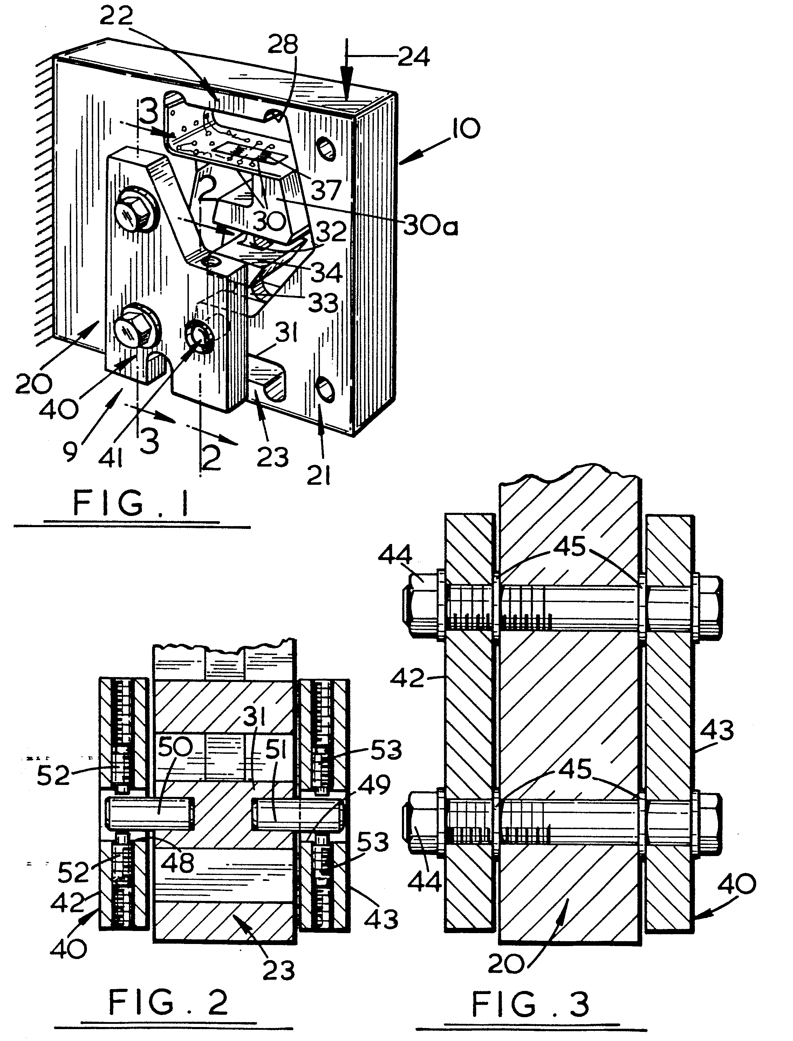

Referring now to the drawings, and particularly to the embodiment shown in Figs. 1 to 3, an overload protection system 9 is illustrated as being applied to a load cell 10 of the parallel beam transducer type illustrated in U.S. Patent Specification No. 4,181,011. This load cell 10 generally includes a fixed end constraint 20, a movable end constraint 21, an upper stabilizer flexure 22 connected between the end constraints 20,21 and a lower stabilizer flexure 23 connected between the end constraints 20,21 such that application of a force on the movable constraint 21 at a point indicated by the arrow 24 will cause deflection of the movable end constraint 21, and since the constraints 20,21 and flexures 22,23 define a parallelogram structure, that deflection will essentially be vertically downward.  Each of the stabilizer flexures 22,23 is provided with semi-circular fillets 28 to more accurately define the flexing of the flexures 22,23.

A sensing beam 30 extends from the fixed end constraint 20 and is connected to an enlarged beam end constraint 30a which is in turn connected to a beam or projection 31 that extends from the movable end constraint 21 through necked down sections 32 and 33 and an enlarged centre section 34.  Strain gauges 37 are mounted on the upper surface of the sensing beam 30 for measuring the stresses induced in the sensing beam representative of a force applied at point 24 to the movable end constraint 21.  More detailed operation of the load cell 10 is set forth in the above identified patent.

The load cell 10 is made from a block of suitable material such as an aluminum alloy by machining operations. Such a material has an elastic limit which if exceeded will overload and damage the material.  Preventing overload and damage of a load cell 10 assures long life and accurate weight measurements.

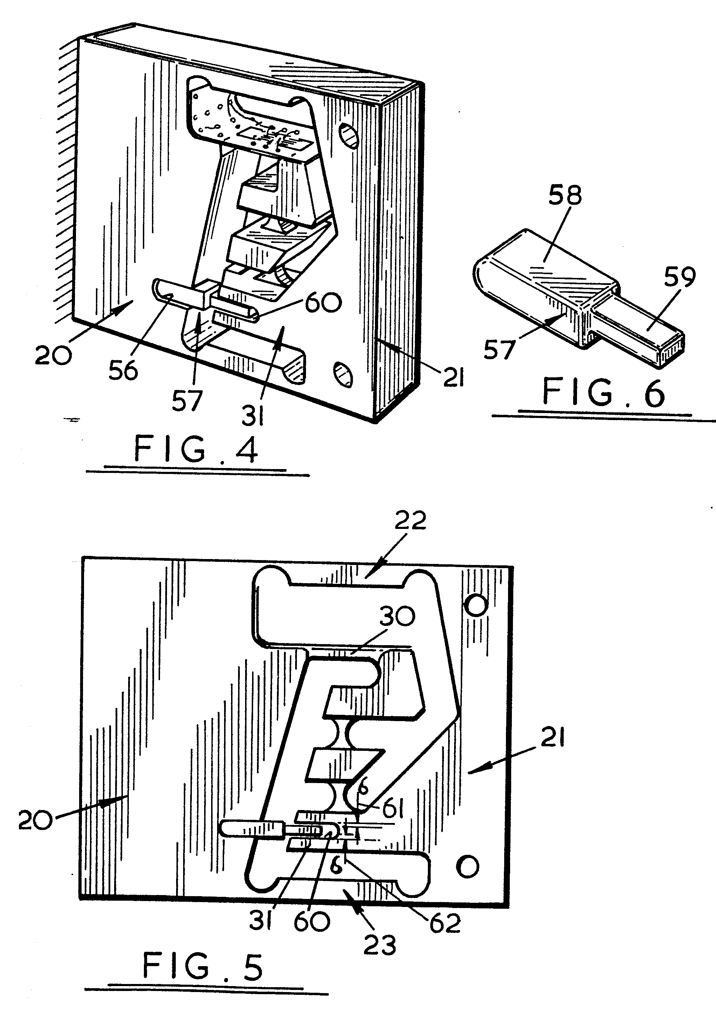

The overload protection system 9 does not interfere with the normal operation of the load cell 10 and is directly mounted on the load cell 10 to provide coaction between the fixed and movable end constraints 20,21 in order to prevent a damaging overload to be induced into the sensing beam 30. The system 9 includes a cantilever beam 40 mounted on the fixed end constraint 20 and a stop 41 coacting with the beam 40 and carried by the movable end constraint 21. The cantilever beam 40, as seen particularly in Figs. 2 and 3, includes a pair of tapered beam sections 42,43 which are of the same shape and are respectively securely fastened to the fixed end constraint 20 on opposite sides thereof by nut and bolt assemblies 44. Spacer washers 45 are provided on the nut and bolt assemblies 44 in order slightly to space the beam sections 42,43 from the fixed end constraint 20 so that the portions of sections 42,43 overlapping the lower flexure 23 and the movable end constraint 21 will not interfere with their movement. Through holes 48 and 49 are provided in the beam sections 42 and 43. The stop 41 is formed by stop pins 50 and 51 that project into holes 48 and 49 and are press-fitted into openings formed in the projection 31. The diameter of the stop pins 50,51 is substantially less than the diameter of the holes 48,49 so that relative movement of the pins in the holes can be accomplished.

In order adjustably to limit the movement of the pins 50,51 in the holes 48,49, set screws 52 are provided in the beam section 42 and set screws 53 are provided in the beam section 43 each in threaded holes formed along vertical axes in line with the centre axis of the pins 50,51. With respect to a gradual or shock load applied in a downward direction on the movable end constraint 21, the lower set screws 52,53 can be set to limit movement of the movable end constraint 21 relative to the fixed end constraint 20, while the upper set screws 52,53 limit the corresponding upward movement whereby the bounce-back of the movable end constraint 21 relative the fixed end constraint 20 is controlled. While the holes 48, 49 and the pins 50,51 could be precisely sized to define the gaps between the holes and pins and thereby a fixed range of movement allowable by the movable end constraint 21, the set screws 52,53 enable the range of movement to be adjustable and eliminate the need precisely to machine the holes 48,49 and the pins 50,51.

It will be appreciated that by controlling the range of movement of the movable end constraint 21, the bending or deformation of the sensing beam 30 will likewise be controlled in the same amount. Should the pins 50,51 engage the set screws 52,53 as a result of an excessive load, that excessive load would be transferred directly to the cantilever beam 40 and to the fixed end constraint 20. Accordingly, the top and bottom set screws 52,53 can be adjusted to set the desired gap to avoid overloading of the sensor beam 30, although the set screws 52,53 would normally be set so that they would not be engaged by the stop pins 50,51 unless the load cell 10 is loaded beyond its rated capacity. Following engagement between the pins 50,51 and the set screws 52,53 on the cantilever beams 42,43 the cantilever beams 42,43 act in parallel with the sensor beam 30, and the deflection of the sensor beam 30 and the cantilever beams 42,43 is the same. It can now be appreciated that the overload protection system 9 will protect against shock loading and gradually applied load and also against "bounce-back" caused by the spring action of the load cell 10 under impact load.

It should be recognized that the cantilever beam 40 could be mounted on the movable end constraint 21 to provide the overload protection system (and indeed this applied to all of the embodiments).

An alternative form of the overload protection system 9 is illustrated in Figs. 4, 5 and 6 wherein cavities 56 (only one being shown in the interests of clarity) are milled into the opposite faces of the fixed end constraint 20 to receive in press-fit relation keys 57 which function as the stop means.    The keys 57 include
an enlarged head 58 that is sized to be press-fitted
into the milled cavities 56 and a reduced stop section 59
that is freely received in milled slots 60 formed in the
projection 31.    As is seen particularly in Fig. 5, the
width of the cavity or slot 60 is greater than the width
of the key stop section 59 to provide an upper gap 61 and
a lower gap 62.    These gaps 61,62 are not adjustable and
therefore accurate machining and close tolerances must be
followed.    Moreover, the key 57 is preferably made out
of a stronger material than the load cell 10, such as
steel.    This embodiment is more compact than the embodiment of Figs. 1 to 3 in that there is no need for using
nut-and-bolt assemblies 44 and the cantilever beam 40,
thereby making it more reliable and economical.    In
effect, the head portion of the key 57 constitutes the
cantilever beam in that it is essentially integral with
the fixed end constraint 20.

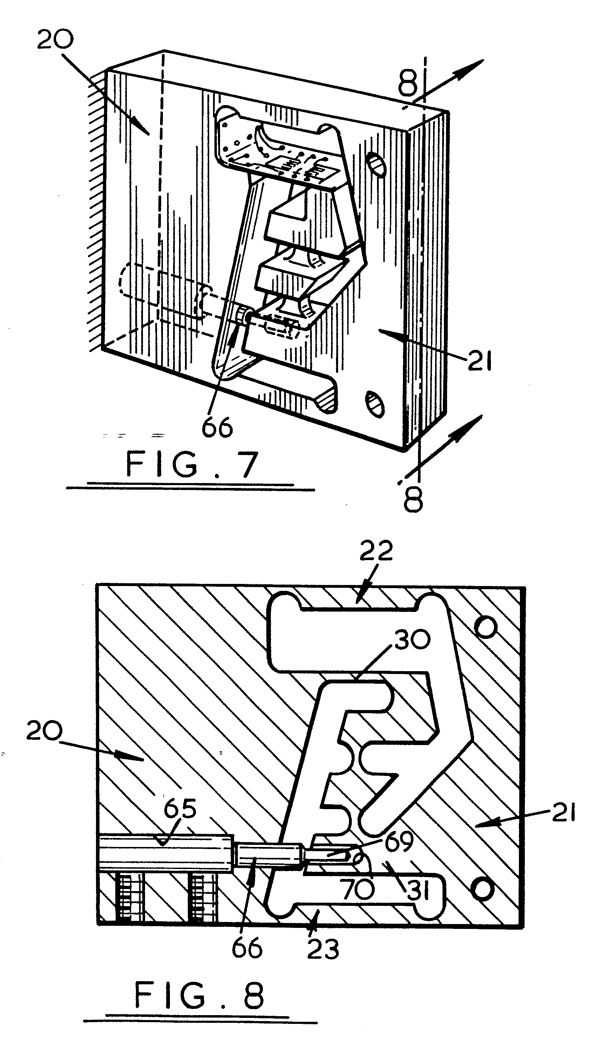

A further embodiment of the overload protection
system 9 is illustrated in Figs. 7 and 8 which differs
from the embodiment of Figs. 4 and 5 in that a counterbored
hole 65 is drilled in fixed end constraint 20 to receive
in the smaller portion a pin or stop member 66 in press-fit
relation.    The pin 66 includes a stepped down end portion
69 that is freely received in a blind hole 70 drilled in
the  projection 31.    Thus, only a single member 66 is
needed in order to coact with a single hole 70 to define
the overload protection system.    The end portion 69 of
the member 66 and the hole 70 must be machined with close
tolerances to provide the necessary and desired working
gaps and allow the desired movement within the range of
the load cell 10 before stopping movement of the movable
end constraint 21 relative the fixed end constraint 20.

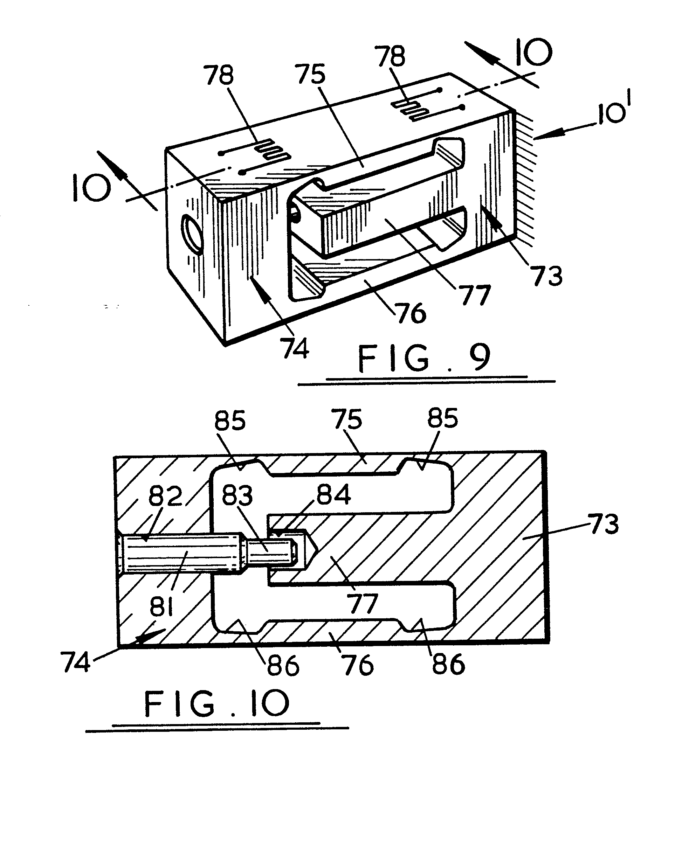

The embodiment of Figs. 9 and 10 illustrates another
parallel beam transducer type of load cell 10' for which
the overload protection system 9 can be used.    This load
cell 10' generally includes a fixed end constraint 73, a movable end constraint 74, upper and lower flexures 75 and 76, and an intermediate cantilever beam 77 extending from the fixed end constraint 73. The upper and lower flexures 75 and 76 also act as sensing beams and therefore have secured thereto strain gauges 78 at the flex areas 85, 86 for detecting the stresses which will be representative of the load applied to the movable end constraint 74.

The overload protection system 9 for this load cell 10' is of the same general type that is disclosed in the embodiment of Figs. 7 and 8 in that a stepped pin 81 fitted to one of the constraints coacts with a hole formed in a beam extending from the other end constraint. The pin 81 in this embodiment is mounted on the movable end constraint 74 although it should be appreciated that the cell 10 could be made whereby the beam 77 would extend from the movable end constraint 74 and the pin 81 mounted in the fixed end constraint 73. The pin 81 is press fitted into a hole 82 formed in the movable end constraint 74 and provided with a necked down end section 83 which is freely received within a blind hole 84 precisely formed in the end of the intermediate beam 77. The operation of the overload protection system 9 in this embodiment is essentially like that of the embodiment in Figs. 7 and 8.

From the foregoing, it can be appreciated that the present invention provides a unique and economical overload protection system for load cells that will protect against both shock and gradual loading.

CLAIMS

1. A load cell for measuring forces applied thereto and having an overload protection system, wherein said load cell comprises a parallel beam transducer having a fixed end constraint and a movable end constraint held in spaced relation from said fixed end constraint characterised in that said overload protection system (9) includes a cantilever beam (40) mounted on and extending from one of said end constraints (20,21), stop means (41) mounted on the other of said end constraints (20,21) coacting with the cantilever beam (40) to limit movement of said movable end constraint (21) and thereby protect the load cell (10) against overload.

2. A load cell as claimed in claim 1, characterised in that said stop means (41) includes at least one pin (50, 51), and said cantilever beam (40) includes a hole (48, 49) freely receiving said pin (50,51).

3. A load cell as claimed in claim 2, characterised in that said cantilever beam (40) further includes means (52,53) coacting with said hole adjustably to limit the movement of said pin (50,51).

4. A load cell as claimed in claim 3, characterised in that said hole coacting means (52,53) includes a pair of coaligned set screws (52 or 53) one on each side of said pin (50,51) defining working gaps with said pin (50,51).

5. A load cell as claimed in claim 1, characterised in that said stop means (41) includes a pair of pins (50,51) one extending from each side of the load cell (10), and said cantilever beam (40) includes a pair of beam sections (42,43) one mounted on each side of said load cell (10) and having respective holes (48,49) freely receiving said pins (50,51).

6. A load cell as claimed in claim 5, characterised in that said holes (48,49) include set screws (52,53) for adjustably limiting movement of the pins (50,51).

7. A load cell as claimed in claim 1, characterised in that said cantilever beam (40) includes at least one key (57) press-fitted into a slot (56) formed in said one end constraint and freely extending into a slot (60) formed in said other end constraint and defining working gaps (61,62) with said slot (60) to allow movement of said movable end constraint (21) within the rated capacity of the load cell (10).

8. A load cell as claimed in claim 1, characterised in that said cantilever beam (40) includes a pin (66) having one end mounted in said one end constraint and the other end (69) freely received in an opening in said other end constraint to coact therewith and define working gaps allowing movement of said movable end constraint (21) within the rated capacity of the load cell (10).

9. A load cell as claimed in claim 1, wherein said cantilever beam (40) is mounted on said fixed end constraint (20) and said stop means (41) is mounted on said movable end constraint (21).

FIG. 1

FIG. 2

FIG. 3

FIG. 4

FIG. 6

FIG. 5

0076616

FIG. 7

FIG. 8

0076616

FIG . 9

FIG . 10